# DEMANDE DE BREVET EUROPEEN

(11) **EP 4 557 122 A1**
(43) Date de publication de la demande: **21.05.2025**
(21) Numéro de dépôt: 23306975.6
(22) Date de dépôt: 14.11.2023
(51) Int. Cl.: G06F 16/332, G06F 16/93, G06N 3/00

(54) **PROCEDE ET SYSTEME INFORMATIQUE DE GESTION DE DOCUMENTS ELECTRONIQUES**

(71) Demandeur: ATOS FRANCE, 95870 Bezons (FR)
(72) Inventeur: LECROART, Yannick, 34280 La Grande Motte (FR)
(74) Mandataire: Novagraaf Technologies

(57) **Abrégé**

Le procédé comporte les étapes, mises en oeuvre par un système informatique, de :
- convertir les documents électroniques d'une première base de données (1100) en vecteurs de nombres ;
- insérer lesdits vecteurs dans une deuxième base de données vectorielle (1200) ;
- recevoir, via un agent conversationnel (1400), une requête de recherche d'informations dans les documents électroniques ;
- générer, via un agent d'IA générative (1500) utilisant la deuxième base de données (1200), une réponse à la requête ;
- en cas de non-validation de la réponse, recevoir, via l'agent conversationnel (1400), des données contextuelles liées aux circonstances de non-validation de la réponse ;
- identifier un document source à mettre à jour dans la première base de données (1100) sur la base de la requête et/ou des données contextuelles ;
- déterminer une action de mise à jour sur la base des données contextuelles et/ou de la requête, via l'agent d'IA générative (1500);
- exécuter une mise à jour de la première base de données (1100) sur la base de l'action de mise à jour.

## Description

### DOMAINE TECHNIQUE

La présente invention concerne la gestion d'un ensemble de documents électroniques.

### ARRIERE PLAN

Dans le cadre d'un projet informatique, tel que le développement d'un nouveau logiciel ou l'installation d'une solution système d'information, une documentation contenant de nombreux documents électroniques est élaborée pour permettre une communication d'informations relatives au projet informatique au sein d'une équipe de développement, avec des parties prenantes et avec des utilisateurs finaux. Par exemple, les documents comprennent un document d'exploitation technique, un manuel de développeur, un document d'architecture technique, un manuel d'utilisateur, ... De telles informations permettent de faciliter la maintenance, le dépannage, ainsi que la formation des utilisateurs.

Lorsqu'un utilisateur souhaite accéder à une information déterminée dans cette documentation, il doit parcourir chaque document, et/ou un sommaire, ou une table des matières, associé à chaque document pour identifier le document et la partie du document contenant l'information recherchée. Une telle recherche d'information s'avère longue et fastidieuse.

La présente invention vise à améliorer la situation, notamment à permettre un accès plus rapide à une information souhaitée dans la documentation.

### RESUME

Selon un premier aspect, l'invention concerne un procédé mis en oeuvre par ordinateur de gestion de documents électroniques stockés dans une première base de données, comportant les étapes, mises en oeuvre par un système informatique, de :
- convertir les documents électroniques de la première base de données en vecteurs de nombres ;
- insérer lesdits vecteurs dans une deuxième base de données vectorielle ;
- recevoir, via un agent conversationnel, une requête de recherche d'informations dans les documents électroniques ;
- générer, via un agent d'intelligence artificielle générative utilisant la deuxième base de données vectorielle, une réponse à la requête ;
- en cas de non-validation de la réponse, recevoir, via l'agent conversationnel, des données contextuelles liées aux circonstances de non-validation de la réponse ;
- identifier un document électronique source à mettre à jour dans la première base de données sur la base de la requête et/ou des données contextuelles ;
- déterminer une action de mise à jour du document électronique source identifié sur la base des données contextuelles et/ou de la requête, via l'agent d'intelligence artificielle générative utilisant la deuxième base de données vectorielle ;
- exécuter une mise à jour de la première base de données sur la base de l'action de mise à jour déterminée.

La présente invention permet d'interagir avec un agent conversationnel pour accéder rapidement au contenu d'un ensemble de documents électroniques et mettre à jour de façon automatique la base de données de documents électroniques, ce qui permet d'accélérer encore et de faciliter l'accès ultérieur à des informations souhaitées. L'utilisation d'un agent conversationnel combiné à un agent d'IA générative permet de faciliter l'accès à des informations souhaitées dans la base de données et la mise à jour de la base de données.

Avantageusement, les étapes de convertir les documents électroniques de la première base de données en vecteurs, et d'insérer lesdits vecteurs dans une deuxième base de données vectorielle sont exécutées une nouvelle fois après mise à jour de la première base de données.

Dans un mode de réalisation particulier, l'étape d'exécuter une mise à jour de la première base de données est exécutée après avoir déterminé une pluralité d'actions de mise à jour à partir d'une pluralité de réponses non-validées.

Par exemple, l'étape d'exécuter une mise à jour de la première base de données est exécutée si le nombre de réponses non-validées a atteint un seuil prédéfini.

Les actions de mise à jour déterminées suite à une succession de réponses non validées sont stockées en mémoire et exécutées en lot, afin de limiter le nombre de mises à jour de la base de données de documents électroniques.

Avantageusement, le procédé comporte une étape de lecture d'un fichier informatique de gouvernance, stocké en mémoire, décrivant les documents électroniques de la première base de données et des paramètres opérationnels de contrôle d'opérations, mis en oeuvre afin d'exécuter au moins l'une des opérations de convertir les documents électroniques en vecteurs, générer une réponse à la requête, et exécuter une mise à jour de la deuxième base de données.

Le fichier de gouvernance permet de spécifier des outils, tels que des logiciels ou applications ou algorithmes, et/ou des paramètres que le système informatique doit utiliser pour exécuter des tâches. Le contenu du fichier peut être modifié, ce qui permet de faire évoluer le système sans modification d'un code source pour l'exécution des tâches du système.

Dans un mode de réalisation, le procédé comporte
une étape de génération de métadonnées associées à chaque vecteur de données, décrivant des informations du document électronique source dont est issu ledit vecteur de données,
lesdites métadonnées étant insérées dans la deuxième base de données vectorielle en association avec ledit vecteur de données correspondant.

Les métadonnées permettent de fournir des informations supplémentaires sur les données stockées. Elles peuvent être utilisées comme attributs des vecteurs de la base de données vectorielle pour faciliter l'extraction de vecteurs.

Avantageusement, l'étape de générer une réponse à la requête comprend une étape d'extraction d'au moins un mot clé de la requête et une étape de comparer le ou les mots clés extraits et les métadonnées dans la deuxième base de données.

Dans un mode de réalisation, l'étape de convertir les documents électroniques en vecteurs comporte les étapes de :
- découper chaque document électronique en objets de plus petite taille ;
- convertir chaque objet en vecteur de nombres dans un espace multidimensionnel ;
- indexer les vecteurs.

Avantageusement, l'étape de convertir les documents électroniques en vecteurs comporte une étape préliminaire de pré-traitement des données des documents électroniques pour corriger et/ou éliminer des erreurs dans les documents électroniques.

L'invention concerne aussi un système informatique de gestion de documents électroniques comprenant:
- une première base de données de stockage des documents électroniques ;
- une deuxième base de données vectorielle ;
- un processeur sur lequel un agent conversationnel et un agent d'intelligence artificielle générative sont installés, et comportant des moyens pour mettre en oeuvre les étapes du procédé précédemment défini.

L'invention concerne encore un programme d'ordinateur comportant des instructions qui lorsqu'elles sont exécutées par un processeur mettent en oeuvre la méthode précédemment définie.

### BREVE DESCRIPTION DES FIGURES

Les exemples de réalisation seront mieux compris à la lumière de la description détaillée qui va suivre et des dessins qui l'accompagnent, lesquels sont donnés à titre d'illustration uniquement et ne sont donc pas limitatifs de la présente divulgation.
La figure 1 représente une vue schématique globale d'un système de gestion d'un ensemble de documents électroniques, selon un mode de réalisation particulier.
La figure 2 représente un exemple de fichier informatique de gouvernance.
La figure 3 représente un organigramme d'un procédé de gestion d'un ensemble de documents électroniques, correspondant à un fonctionnement du système de la figure 1, selon un mode de réalisation particulier.
La figure 4 représente un organigramme d'étapes de conversion de documents électroniques en vecteurs, selon un mode de réalisation de l'invention.

### DESCRIPTION DETAILLEE

Divers exemples de réalisation vont maintenant être décrits plus en détail, à titre d'exemples non limitatifs, en référence aux dessins qui accompagnent la présente divulgation et qui illustrent certains exemples de réalisation.

Les détails structurels et fonctionnels spécifiques décrits ici constituent des exemples non limitatifs. Les exemples de réalisation décrits ici peuvent faire l'objet de diverses modifications et formes alternatives. L'objet de la divulgation peut être réalisé sous de nombreuses formes différentes et ne doit pas être interprété comme étant limité aux seules réalisations présentées ici à titre d'exemples illustratifs. Il convient de comprendre qu'il n'y a aucune intention de limiter les modes de réalisation aux formes particulières décrites dans la suite de ce document.

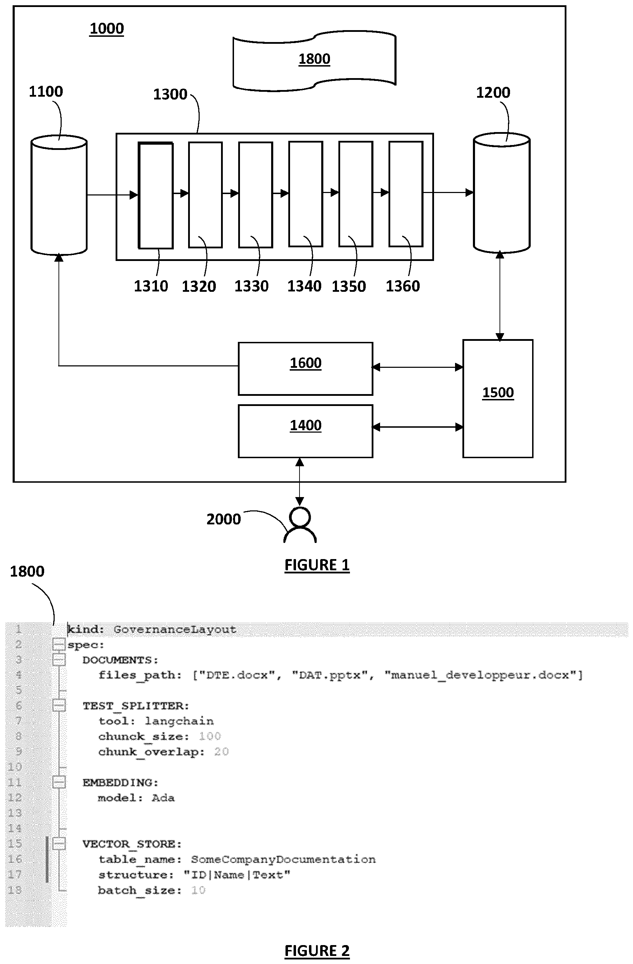

La figure 1 représente une architecture globale d'un système 1000 de gestion d'un ensemble de documents électroniques. Le système 1000 comporte plusieurs composants qui interagissent entre eux pour permettre une gestion des documents électroniques, notamment un accès à des informations contenues dans les documents électroniques et une mise à jour ou modification des documents électroniques permettant un accès rapide à une information souhaitée.

L'architecture du système global, ou plateforme, 1000 comporte une première base de données 1100, une deuxième base de données 1200, une chaîne ou système 1300 de conversion de documents électroniques en vecteurs, un agent conversationnel 1400, un agent d'intelligence artificielle (IA) générative 1500, et un agent de mise à jour 1600.

Le système 1000 comprend également des moyens d'interface utilisateur, non représentés.

Un module central de contrôle, non représenté, comportant un ou plusieurs processeurs, permet de contrôler le fonctionnement des différents éléments du système 1000.

Le système 1000 est implémenté par des moyens hardware (matériel) et des moyens software (logiciel). Les moyens hardware peuvent comprendre un ou plusieurs processeurs. Les moyens software peuvent comprendre des applications, logiciels, programmes d'ordinateur, et/ou un ensemble d'instructions de programme et de données.

La première base de données 1100 a pour rôle de stocker un ensemble de documents électroniques D1, D2, .... Ces documents électroniques forment une documentation, par exemple la documentation d'un projet informatique de développement d'un logiciel ou d'installation d'un système d'information. Chaque document électronique peut comprendre des données de texte, et optionnellement des données d'images,. Il existe de nombreux formats de fichiers pour créer de la documentation, par exemple des formats de texte brut (txt, Markdown, AsciiDoc, ...), des formats de traitement de texte (docx, odt, pdf, ...), des formats de présentation (pptx, odp, OpenDocument, pdf, ...), des formats de feuilles de calcul (clsx, ods, OpenDocument, ...), des formats de fichiers HTML HTML, MHTML, CHM, ...), des formats de fichiers spécialisés pour la documentation technique (DITA, DocBook, reStructuredText, ...), des formats de fichiers de bases de données (SQL, CSV, ...), des formats de publication en ligne (Wiki, CMS, ...), des formats de documentation de code source (C, C++, Java, Python, ...), etc.

La chaîne de conversion 1300 a pour fonction de convertir des documents électroniques de la première base de données 1100 en vecteurs de nombres et d'insérer ces vecteurs dans la deuxième base de données 1200 vectorielle. La chaîne de conversion 1300 comprend plusieurs composants.

Un premier composant 1310 de la chaîne de conversion 1300 a une fonction de pré-traitement des documents électroniques stockés dans la première base de données 1100. Le pré-traitement peut consister à éliminer et/ou corriger des erreurs, incohérences ou doublons et/ou ajouter des informations manquantes (par exemple des mots et/ou caractères manquants). Le composant de pré-traitement 1310 peut comprendre un correcteur d'orthographe et/ou de grammaire pour détecter et automatiquement corriger des erreurs d'orthographe et/ou de grammaire dans des données de texte des documents électroniques de la première base de données 1100.

Un deuxième composant 1320 de la chaîne de conversion 1300 est un module de découpage agencé pour découper un document électronique, dit « document source », en éléments ou objets de plus petite taille. Dans un mode de réalisation particulier, le document source contient du texte et le module de découpage 1320 est agencé pour découper le texte du document source en objets ou tronçons de texte. Un objet ou tronçon de texte peut contenir un mot, un groupe de mots, ou une phrase du document source. Le module de découpage 1320 peut être mis en oeuvre à l'aide d'un outil logiciel permettant de diviser un texte en phrases, en paragraphes ou en unités plus petites, tel que spaCy, NLTK (Natural Language Tollkit), Stanford NLP, TextBlob, SentencePiece, ...

Un troisième composant 1330 de la chaîne de conversion 1300 est un générateur de métadonnées ayant pour fonction de générer des métadonnées pour chaque objet issu du découpage d'un document source. Les métadonnées relatives à un objet décrivent des informations du document source dont est issu cet objet. Les métadonnées peuvent comprendre des données descriptives relatives au document source et/ou une partie de ce document source, dont l'objet est issu. Par exemple, les métadonnées peuvent comporter des mots clés décrivant le document et/ou la partie du document dont l'objet est issu. Ces mots clés peuvent être obtenus par traitement ou analyse du document source et/ou de la partie du document source dont l'objet est issu à l'aide d'un outil d'extraction automatique d'informations clés ou essentielles. Par exemple, des mots clés peuvent être extraits d'une dénomination (par exemple, titre, nom de fichier, etc.) du document source et/ou de la partie du document source dont l'objet est issu afin de générer les métadonnées.

Un quatrième composant 1340 de la chaîne de conversion 1300 est un module d'intégration vectorielle, ou « *vector embedding* » en anglais, dont le rôle est de convertir chaque objet produit par le module de découpage 1320 en un vecteur de nombres, ou vecteur numérique, ou vecteur de données numériques, dans un espace multidimensionnel. Les vecteurs sont des représentations numériques d'objets du document, convertis en séquences de nombres, ce qui permet à un ordinateur ou un processeur de comprendre facilement les relations entre les objets. Par exemple, le mot « chat » peut être représenté par un vecteur de nombres, tel que [0.2, -0.5, 0.7...]. La distance entre deux vecteurs mesure leur relation. De petites distances suggèrent une forte similarité et de grandes distances suggèrent une faible similarité. Le module d'intégration vectorielle 1340 peut utiliser un outil d'intégration ou de représentation vectorielle (« vector embedding ») tel que ADA, Word2Vec, FastText, ...

Un cinquième composant 1350 de la chaîne de conversion 1300 est un module d'indexation. Ce composant 1350 a pour rôle d'indexer les vecteurs produits par le module d'intégration vectorielle 1340 en utilisant une méthode ou technique d'indexation multidimensionnelle telle que PQ (de l'anglais « *Product Quantization* »), LSH (de l'anglais « *Locality-Sensitive Hashing* ») ou HNSW (de l'anglais « *Hierarchical Navigable Small World* ». Ces méthodes d'indexation vectorielle permettent l'indexation de vecteurs multidimensionnels selon leur localisation et distribution dans l'espace multidimensionnel. Après indexation, chaque vecteur est associé à une structure de données permettant une recherche plus rapide dans la deuxième base de données vectorielle 1200. L'indexation permet d'organiser les données de manière à faciliter des opérations de recherche spatiale dans l'espace multidimensionnel.

La chaîne de conversion 1300 peut également comprendre un composant d'insertion 1360 dont le rôle est d'insérer les vecteurs et autres données (métadonnées, structures de données d'indexation vectorielle) produits par les autres composants de la chaîne 1300 dans la base de données vectorielle 1200. Le composant 1360 a également pour rôle de définir ou déterminer la structure de la base de données 1200.

L'agent conversationnel 1400, ou «*chatbot*» en anglais, a pour rôle de dialoguer avec un utilisateur. A titre d'exemple illustratif et non limitatif, l'agent conversationnel peut être développé sur une plateforme open source Rasa permettant le développement de chatbots conversationnels et d'assistants virtuels en Python. L'agent conversationnel 1400 peut également utiliser un outil logiciel d'extraction automatique de mots clés.

L'agent ou système d'intelligence artificielle générative, ou d'lA générative, 1500 a pour fonction de créer des réponses à des requêtes ou demandes de recherche d'informations dans les documents électroniques de la base de données 1100. Il a aussi pour rôle de générer des questions, fournies à l'agent conversationnel 1400 interagissant avec un utilisateur 2000, visant à obtenir des données contextuelles liées aux circonstances de non-validation d'une réponse, et de générer une action de mise à jour de la base de données 1100, comme cela sera explicité plus loin dans la description du procédé. L'agent d'IA générative 1500 peut s'appuyer sur un grand modèle de langage, ou LLM (de l'anglais « *large language model* »).

L'agent ou module ou système de mise à jour 1600 a pour rôle de mettre à jour la première base de données 1100 de documents électroniques, via l'agent conversationnel 1400 et l'agent d'IA générative 1500, comme cela sera décrit plus en détail dans la description du procédé. Il comprend un agent d'apprentissage par renforcement (ou « *Reinforcement Learning agent* » en anglais).

L'apprentissage par renforcement réalisée au sein de la plateforme ou système 1000 est réalisée par une IA (Intelligence Artificielle) symbolique sur la base d'un ou plusieurs retours utilisateur(s). Il s'agit d'une approche de l'intelligence artificielle qui se fonde sur la manipulation de symboles et de représentations formelles pour effectuer des tâches cognitives et résoudre des problèmes. Contrairement à d'autres approches de l'IA, telles que l'apprentissage automatique et les réseaux de neurones, qui se concentrent sur l'apprentissage à partir de données brutes, l'IA symbolique repose sur des règles logiques, des connaissances déclaratives et des processus de raisonnement. Ces règles logiques sont mises en oeuvre par le biais de questions/réponses avec un utilisateur 2000. Les caractéristiques de l'IA symbolique peuvent comprendre tout ou partie des éléments suivants:
- représentation des connaissances : dans l'IA symbolique, les connaissances sont souvent représentées de manière explicite sous forme de symboles, de prédicats, de règles logiques, de graphes, etc. Ces représentations permettent de capturer la sémantique et la structure des informations ;
- raisonnement symbolique : l'IA symbolique utilise le raisonnement logique et symbolique pour traiter et manipuler les connaissances représentées. Cela implique l'application de règles de déduction, d'inférence, et de résolution de problèmes ;
- manipulation de symboles : les systèmes d'lA symbolique manipulent des symboles et des entités abstraites pour résoudre des problèmes. Par exemple, ils peuvent utiliser des opérations logiques telles que la modélisation de connaissances, l'induction de règles, et la recherche de solutions ;
- transparence et explicabilité : l'IA symbolique offre souvent une plus grande transparence et explicabilité que d'autres approches d'lA. Cela signifie que les décisions prises par le système peuvent être retracées jusqu'à des règles logiques ou des connaissances spécifiques, ce qui facilite la compréhension du fonctionnement du système.

L'IA symbolique correspond ainsi à un raisonnement expert permettant de déterminer un élément en anomalie et à modifier compte tenu d'un retour utilisateur.

Dans un mode de réalisation particulier, le système 1000 peut également comprendre un fichier informatique de gouvernance et/ou de paramétrage 1800, stocké en mémoire. Ce fichier informatique peut être un fichier déclaratif, par exemple de type CSV, YAML, XML ou autre. Un exemple de fichier de gouvernance 1800 est illustré sur la figure 2. Il contient des informations de désignation et/ou de description des documents électroniques contenus dans la première base de données 1100, par exemple en indiquant un nom de fichier pour chaque document électronique. Il décrit également des paramètres opérationnels de contrôle d'opérations du système 1000, destinés à être utilisés par des entités du système 1000 pour exécuter diverses opérations. A titre d'exemple illustratif et non limitatif, le fichier de gouvernance 1800 spécifie :
- un outil logiciel de découpage destiné à être utilisé par le module 1320 pour découper les documents en objets, et éventuellement des paramètres de découpage (par exemple, taille des objets, taille de chevauchement des objets, etc.) ;
- un outil logiciel d'intégration vectorielle ou de « *vector embedding* » destiné à être utilisé par le module 1340 pour convertir des objets en vecteurs de nombres ;
- un outil logiciel d'extraction de mots clés ;
- des informations, par exemple un nom et/ou une structure de table, permettant de définir une structure pour la base de données vectorielle 1200 ;
- une fréquence de mise à jour selon laquelle la première base de données 1100 est mise à jour après un certain nombre de réponses non-validées.

La figure 2 représente un exemple purement illustratif de fichier de gouvernance 1800 spécifiant les documents contenus dans la base de données 1100, un outil de découpage « *langchain* » et des paramètres de découpage, un outil d'intégration vectorielle « *ADA* », des paramètres relatifs à la base de données vectorielle (nom de table et structure de table), ainsi qu'un paramètre de fréquence de mise à jour (« 10 »).

En fonctionnement, chaque élément du système 1000 peut accéder au fichier 1800 et y lire des paramètres opérationnels de contrôle d'opération ou de tâche à mettre en oeuvre.

Le fichier 1800 est modifiable, ce qui permet de faire évoluer les outils et/ou paramètres opérationnels du système 1000, sans qu'il soit nécessaire de modifier un code source permettant l'exécution de tâches et opérations par le système 1000.

Le module de contrôle (non représenté) est agencé pour contrôler le fonctionnement du système 1000. Il peut comprend un orchestrateur de tâches destiné à ordonnancer les tâches exécutées par le système 1000.

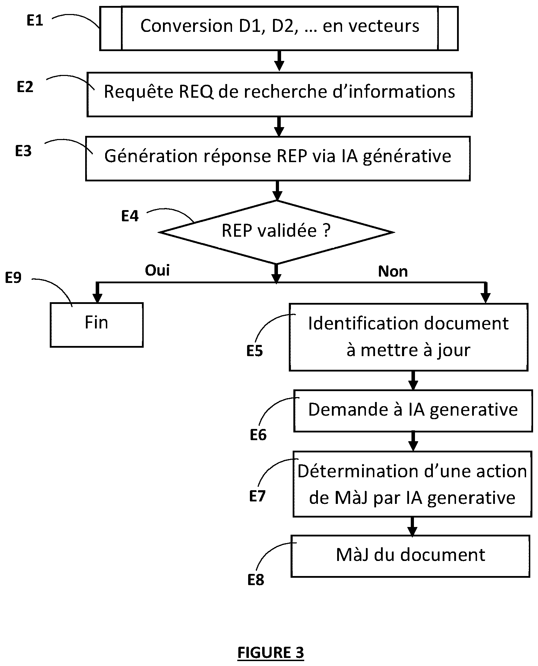

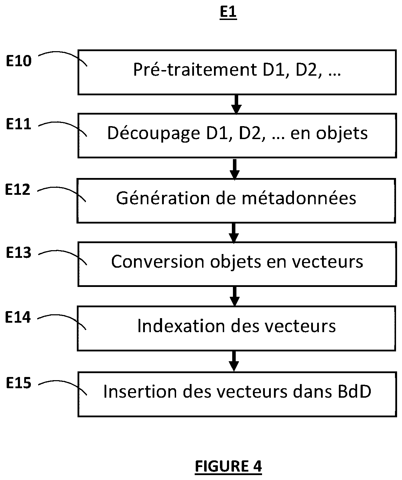

On va maintenant décrire un procédé de gestion et de mise à jour de documents électroniques D1, D2, ..., correspondant au fonctionnement du système 1000, en référence aux figures 3 et 4. Les documents électroniques D1, D2, ... sont stockés dans la base de données 1100. Ces documents D1, D2, ... peuvent comprendre du texte, des images et/ou tout autre type de données.

Lors d'une étape E1, les documents électroniques D1, D2, ... de la base de données 1100 sont convertis en vecteurs de nombres et insérés dans la base de données vectorielle 1200. L'étape E1 peut comprendre plusieurs étapes E10 à E15, décrites ci-après.

Lors de l'étape E10, le module de pré-traitement 1310 effectue un pré-traitement des documents électroniques D1, D2, ... pour éliminer et/ou corriger des erreurs, incohérences ou doublons et/ou ajouter des données manquantes (par exemple mots, charactères, ...) Le pré-traitement peut comprend une correction automatique d'orthographe et/ou de grammaire dans les données de texte des documents électroniques D1, D2, ...

Lors d'une étape E11, le module de découpage 1320 découpe chaque document en objets de plus petite taille. Un objet peut par exemple comprendre un mot, un groupe de mots ou une phrase. Il pourrait également comprendre une image ou une fraction d'image, ou tout autre type de données.

Lors d'une étape E12, le générateur de métadonnées 1330 détermine, pour chaque objet produit par le module de découpage 1320 lors de l'étape E11, des métadonnées décrivant des informations du document source dont est issu l'objet. Par exemple, les métadonnées peuvent contenir des données de désignation du document source et/ou d'une partie (chapitre, section, paragraphe, etc.) du document source, dont l'objet est issu. Les métadonnées peuvent par exemple contenir des mots clés extraits du document et/ou de la partie du document dont l'objet est issu (par exemple, des mots clés extraits d'un titre ou d'une dénomination du document ou de partie du document, un nom de fichier du document, ...).

Lors d'une étape E13, les objets produits lors de l'étape E11 sont convertis par le module d'intégration vectorielle 1340 en vecteurs de nombres dans un espace multidimensionnel.

Lors d'une étape E14, les vecteurs résultant de l'étape E13 sont indexés par le module d'indexation 1350. Une structure de données est créée et associée à chaque vecteur. Elle permet une recherche plus rapide dans la base de données vectorielle 1200.

Lors d'une étape E15, les vecteurs résultant de l'étape de conversion E13 sont insérés dans la base de données vectorielle 1200 par le composant d'insertion 1360. Lors de l'étape d'insertion des vecteurs, les métadonnées générées lors de l'étape E12 et les structures de données d'indexation générées lors de l'étape d'indexation E14 sont également insérées dans la base de données vectorielle 1200 et associées dans la base de données vectorielle 1200 aux vecteurs correspondants. Ainsi, dans la base de données vectorielle 1200, chaque vecteur de nombres est associé aux métadonnées associées à l'objet du document source dont ce vecteur est issu et à la structure de données d'indexation associée à ce vecteur.

Avant d'insérer des données dans la base de données vectorielle 1200, le composant d'insertion 1360 détermine et/ou définit la structure de données de la base de données vectorielle 1200 sur la base des informations spécifiées dans le fichier de gouvernance 1800. Puis il établit une connexion avec la base de données 1200, via un traitement automatisé exécuté par l'orchestrateur de tâches par exemple. L'insertion des données dans la base de données 1200 est effectuée sur la base d'instructions d'insertion générées par le composant d'insertion 1360. Les instructions d'insertion spécifient la structure de la base de données 1200, par exemple une table ou une classe d'entités dans laquelle les données doivent être insérées.

Après conversion des documents électroniques D1, D2, ... en vecteurs et insertion des vecteurs et de leurs attributs (métadonnées, structure de données d'indexation) dans la base de données vectorielle 1200, le système 1000 reçoit une requête de recherche d'informations dans les documents électroniques D1, D2, ..., via l'agent conversationnel 1400, lors d'une étape E2. La requête peut être saisie par un utilisateur à l'aide des moyens d'interface utilisateur 1700. Lors de l'étape E2, l'utilisateur peut interagir avec l'agent conversationnel 1400 sous la forme d'une ou plusieurs séquences de question-réponse. La requête REQ peut donc comprendre une ou plusieurs questions successives posées par l'utilisateur via l'agent conversationnel 1400.

A titre d'exemple illustratif, en référence à la figure 3, la requête REQ peut être « quels sont les identifiants de connexion à la base de données PostGresQLdatabase » ?

Lors de l'étape E2, l'agent conversationnel 1400 extrait des informations clés, en l'espèce des mots clés, de la requête d'informations REQ et transmet les mots clés à l'agent d'IA générative 1500.

Lors d'une étape E3, l'agent d'IA générative génère une réponse REP à la requête sur la base de la requête REQ, ici sur la base des mots clés extraits de la requête REQ, en utilisant la base de données vectorielle 1200. Lors de l'étape E3, l'agent d'IA générative 1500 recherche dans la base de données vectorielle 1200 des vecteurs en lien avec la requête REQ, ici avec les mots clés extraits de la requête REQ. Dans un mode de réalisation particulier, l'agent d'IA générative 1500 calcule, pour tout ou partie des vecteurs de la base de données vectorielle 1200, des scores de proximité et/ou similarité avec le ou les mots clés extraits de la requête REQ, et détermine (extrait) les vecteurs de la base de données vectorielle 1200 ayant les meilleurs scores. L'agent d'IA générative 1500 génère ensuite une réponse REP sur la base des vecteurs déterminés ou extraits de la base de données vectorielle 1200.

Dans le cas où l'utilisateur interagit avec l'agent conversationnel 1400 sous la forme d'une ou plusieurs séquences de question-réponse lors de l'étape E3, la réponse REP comprend l'ensemble des réponses à la série de questions composant la requête REQ.

Dans l'exemple illustratif de la figure 3, la réponse REP indique que les identifiants de connexion à la base de données PostGresQLdatabase n'ont pas été trouvés dans les documents D1, D2, ...

Lors d'une étape E4, l'agent conversationnel 1400, via l'agent d'IA générative, interagit avec l'utilisateur pour déterminer si la réponse REP à la requête REQ est valide.

Si la réponse REP est validée par l'utilisateur lors de l'étape E4, le procédé de mise à jour de la base de données 1100 est interrompu, lors d'une étape E9.

Si la réponse REP n'est pas validée par l'utilisateur lors de l'étape E4, des données contextuelles *context data* liées aux circonstances de non-validation de la réponse REP sont reçues, obtenues lors d'une interaction (par exemple sous la forme de questions/réponses) entre l'utilisateur et l'agent conversationnel 1400 de l'étape E4. Ces données contextuelles *context data* contiennent des informations explicatives sur la non-validation de la réponse REP. Elles peuvent être obtenues en réponse à des questions, générées par l'agent d'IA générative 1500 et visant à déterminer les circonstances ou raisons de non-validation de la réponse REP, lors d'une interaction entre l'agent conversationnel 1400 et l'utilisateur lors de l'étape E4. La requête REQ, éventuellement la réponse REP, et les données contextuelles *context data* liées aux circonstances de non-validation de la réponse peuvent être transmises par l'agent conversationnel 1400 à l'agent de mise à jour 1600.

Dans l'exemple illustratif de la figure 3, lors de l'étape E4, les données contextuelles *context data* liées aux circonstances de non-validation de la réponse REP indiquent que les identifiants de connexion à la base de données PostGresQLdatabase sont manquants dans les documents D1, D2, ... de la base de données 1100.

Lors d'une étape E5, l'agent de mise à jour 1600 identifie un document électronique source de la base de données 1100 à mettre à jour et/ou une partie spécifique d'un document électronique source de la base de données 1100 à mettre à jour, sur la base de la requête REQ et des données contextuelles *context data* liées aux circonstances de non-validation de la réponse REP à cette requête REQ. A cet effet, l'agent 1600 peut utiliser la base de données vectorielle via les métadonnées pour le document et/ou la partie de document à mettre à jour. Lors de l'étape E5, l'agent de mise à jour 1600 peut récupérer le document à mettre à jour dans la base de données 1100.

Dans l'exemple illustratif de la figure 3, lors de l'étape E5, l'agent de mise à jour 1600 identifie un document de description et d'utilisation de la base de données PostGresQLdatabase, contenu dans la base de données 1100, et un paragraphe de ce document relatif à l'accès à la base de données PostGresQLdatabase.

Lors d'une étape E6, l'agent de mise à jour 1600 demande à l'agent d'IA générative 1500 de déterminer une action de mise à jour du document identifié et/ou de la partie de document identifiée lors de l'étape E5. Lors de l'étape E6, l'agent de mise à jour 1600 peut transmettre à l'agent d'IA générative 1500 les données contextuelles *context data* liées aux circonstances de non-validation de la réponse REP et éventuellement la requête REQ dont la réponse REP est non-validée.

Lors d'une étape E7, l'agent d'IA générative 1500 détermine une action de mise à jour du document identifié lors de l'étape E5 et/ou de la partie de document identifiée lors de l'étape E5, en utilisant la base de données vectorielle 1200, sur la base des données contextuelles *context data* liées aux circonstances de non-validation de la réponse REP et/ou de la requête REQ dont la réponse REP est non-validée. L'agent d'IA générative 1500 fournit l'action de mise à jour déterminée à l'agent de mise à jour 1600. Plus précisément, l'agent d'IA générative 1500 transmet à l'agent de mise à jour 1600 des instructions et données relatives à l'action de mise à jour, typiquement pour ajouter, modifier et/ou supprimer des données dans le document ou à la partie de document à mettre à jour. Les données à ajouter ou à supprimer peuvent comprendre des données de texte, d'image et/ou tout autre type de données.

Dans l'exemple illustratif de la figure 3, l'action de mise à jour consiste à ajouter dans le document de description et d'utilisation de la base de données PostGresQLdatabase une section contenant des informations pour se connecter à la base de données PostGresQLdatabase. Ces informations comprennent par exemple :
- des identifiants de connexion à la base de données PostGresQLdatabase ; et/ou
- un lien ou un hyperlien permettant de passer automatiquement du document de description et d'utilisation de la base de données PostGresQLdatabase à une interface d'accès à la base de données PostGresQLdatabase (par exemple, de type page web) permettant de créer et/ou de saisir des identifiants de connexion à cette base de données ; et/ou
- des règles de création d'identifiants pour accéder à la base de données PostGresQLdatabase.

Lors d'une étape E8, l'agent de mise à jour 1600 effectue une opération de mise à jour de la base de données 1100 en exécutant l'action de mise à jour spécifiée par l'agent d'IA générative 1500. Il met à jour le document identifié et/ou la partie de document identifiée dans la base de données 1100, sur la base des instructions et données fournies par l'agent d'IA générative 1500.

Une étape de lecture du fichier informatique de gouvernance 1800 est mise en oeuvre avant d'exécuter chacune d'au moins une partie des tâches E10 à E15, E2 à E8 mises en oeuvre par le système 1000, afin de contrôler et/ou paramétrer l'exécution de ces tâches sur la base des données contenues dans le fichier 1800.

Après l'opération de mise à jour E8, l'étape E1 est exécutée une nouvelle fois sur la base de données 1100 mise à jour. La base de données vectorielle 1200 est ainsi également mise à jour.

En variante, l'étape E8 d'exécuter une mise à jour de la base de données 1100 est exécutée si le nombre de réponses non-validées a atteint un seuil prédéfini. La mise à jour E8 peut ainsi inclure une pluralité d'actions de mise à jour dans la première base de données déterminées à partir d'une pluralité de réponses non-validées.

On pourrait prévoir une phase d'évaluation des bases de données 1100 et 1200 mises à jour, pendant laquelle les deux versions (ancienne et mise à jour) des bases de données 1100 et 1200 sont comparées.

Les personnes du métier comprendront que tous les schémas fonctionnels présentés ici représentent des vues conceptuelles, données à titre d'exemple, de circuits incorporant les principes de la divulgation.

Chaque fonction, bloc, étape décrit peut être mis en oeuvre dans du matériel, des logiciels, des microprogrammes, des intergiciels, des microcodes ou toute combinaison appropriée de ceux-ci. S'ils sont mis en oeuvre dans un logiciel, les fonctions ou blocs des schémas fonctionnels et des organigrammes peuvent être mis en oeuvre par des instructions de programme d'ordinateur/codes de logiciel, qui peuvent être stockés ou transmis sur un support lisible par ordinateur, ou chargés sur un ordinateur à usage général, un ordinateur à usage spécial ou un autre appareil de traitement programmable et/ou un système, de sorte que les instructions de programme d'ordinateur ou les codes de logiciel qui s'exécutent sur l'ordinateur ou un autre appareil de traitement programmable, créent les moyens de mettre en oeuvre les fonctions décrites dans la présente description.

Bien que les aspects de la présente divulgation aient été décrits en référence à des réalisations particulières, il convient de comprendre que ces réalisations ne font qu'illustrer les principes et les applications de la présente divulgation. Il est donc entendu que de nombreuses modifications peuvent être apportées aux modes de réalisation illustratifs et que d'autres arrangements peuvent être conçus sans s'écarter de l'esprit et de la portée de la divulgation tels que déterminés sur la base des revendications et de leurs équivalents.

Les avantages et les solutions aux problèmes ont été décrits ci-dessus en ce qui concerne des modes de réalisation spécifiques de l'invention. Cependant, les avantages, les bénéfices, les solutions aux problèmes, et tout élément qui peut causer ou résulter en de tels avantages, bénéfices ou solutions, ou causer de tels avantages, bénéfices ou solutions à devenir plus prononcés ne doivent pas être interprétés comme une caractéristique ou un élément critique, requis, ou essentiel de l'une ou de l'ensemble des revendications.

## Revendications

1. Procédé mis en oeuvre par ordinateur de gestion de documents électroniques stockés dans une première base de données (1100), comportant les étapes, mises en oeuvre par un système informatique, de :
- convertir (E1) les documents électroniques de la première base de données (1100) en vecteurs de nombres ;
- insérer (E15) lesdits vecteurs dans une deuxième base de données vectorielle (1200) ;
- recevoir (E2), via un agent conversationnel (1400), une requête de recherche d'informations dans les documents électroniques ;
- générer (E3), via un agent d'intelligence artificielle générative (1500) utilisant la deuxième base de données vectorielle (1200), une réponse à la requête ;
- en cas de non-validation de la réponse, recevoir (E4), via l'agent conversationnel (1400), des données contextuelles liées aux circonstances de non-validation de la réponse ;
- identifier (E5) un document électronique source à mettre à jour dans la première base de données (1100) sur la base de la requête et/ou des données contextuelles ;
- déterminer (E7) une action de mise à jour du document électronique source identifié sur la base des données contextuelles et/ou de la requête, via l'agent d'intelligence artificielle générative (1500) utilisant la deuxième base de données vectorielle (1200) ;
- exécuter (E8) une mise à jour de la première base de données (1100) sur la base de l'action de mise à jour déterminée.

2. Procédé selon la revendication 1, dans lequel les étapes (E1) de convertir les documents électroniques de la première base de données (1100) en vecteurs, et d'insérer (E15) lesdits vecteurs dans une deuxième base de données vectorielle (1200) sont exécutées une nouvelle fois après mise à jour de la première base de données (1100).

3. Procédé selon l'une des revendications 1 et 2, dans lequel l'étape (E8) d'exécuter une mise à jour de la première base de données (1100) est exécutée après avoir déterminé une pluralité d'actions de mise à jour à partir d'une pluralité de réponses non-validées.

4. Procédé selon la revendication 3, dans lequel l'étape (E8) d'exécuter une mise à jour de la première base de données (1100) est exécutée si le nombre de réponses non-validées a atteint un seuil prédéfini.

5. Procédé selon l'une des revendications 1 à 4, comportant une étape de lecture d'un fichier informatique de gouvernance, stocké en mémoire, décrivant les documents électroniques de la première base de données et des paramètres opérationnels de contrôle d'opérations, mis en oeuvre afin d'exécuter au moins l'une des opérations de convertir les documents électroniques en vecteurs, générer une réponse à la requête, et exécuter une mise à jour de la deuxième base de données.

6. Procédé selon l'une des revendications 1 à 5, comportant
une étape (E12) de génération de métadonnées associées à chaque vecteur de données, décrivant des informations du document électronique source dont est issu ledit vecteur de données,
lesdites métadonnées étant insérées dans la deuxième base de données vectorielle (1200) en association avec ledit vecteur de données correspondant.

7. Procédé selon la revendication 6, dans lequel l'étape (E3) de générer une réponse à la requête comprend une étape d'extraction d'au moins un mot clé de la requête et une étape de comparer le ou les mots clés extraits et les métadonnées dans la deuxième base de données (1200).

8. Procédé selon l'une des revendications 1 à 7, dans lequel l'étape de convertir les documents électroniques en vecteurs comporte les étapes de :
- découper chaque document électronique en objets de plus petite taille ;
- convertir chaque objet en vecteur de nombres dans un espace multidimensionnel ;
- indexer les vecteurs.

9. Procédé selon la revendication 8, dans lequel l'étape de convertir les documents électroniques en vecteurs comporte une étape préliminaire de pré-traitement des données des documents électroniques pour corriger et/ou éliminer des erreurs dans les documents électroniques.

10. Système informatique de gestion de documents électroniques comprenant :
- une première base de données de stockage des documents électroniques ;
- une deuxième base de données vectorielle ;
- un processeur sur lequel un agent conversationnel et un agent d'intelligence artificielle générative sont installés, et comportant des moyens pour mettre en oeuvre les étapes du procédé selon l'une des revendications 1 à 9.

11. Programme d'ordinateur comportant des instructions qui lorsqu'elles sont exécutées par un processeur mettent en oeuvre la méthode selon l'une quelconque des revendications 1 à 9.
